Europäisches Patentamt

European Patent Office

Office européen des brevets

(19)

(11) Numéro de publication: **0 015 187**
**B1**

(12) **FASCICULE DE BREVET EUROPEEN**

(45) Date de publication du fascicule du brevet: **25.05.83**

(51) Int. Cl.³: **B 65 D 51/00**

(21) Numéro de dépôt: **80400184.0**

(22) Date de dépôt: **06.02.80**

(54) Bouchon pour réservoir d'hydrocarbure ou autre liquide analogue.

(30) Priorité: **26.02.79 FR 7904803**

(43) Date de publication de la demande:
**03.09.80 Bulletin 80/18**

(45) Mention de la délivrance du brevet:
**25.05.83 Bulletin 83/21**

(84) Etats contractants désignés:
**DE GB NL SE**

(56) Documents cités:
**DE - A - 2 207 044**
**DE - C - 892 558**
**FR - A - 886 998**
**FR - A - 2 376 037**

(73) Titulaire: **PAUMELLERIE ELECTRIQUE Société dite:**
**La Rivière de Mansac**
**F-19600 Larche (FR)**

(72) Inventeur: **Saigne, Gérard**
**La Riviere de Mansac**
**F-19600 Larche (FR)**

(74) Mandataire: **Polus, Camille et al,**
**c/o Cabinet Lavoix 2, Place d'Estienne d'Orves**
**F-75441 Paris Cedex 09 (FR)**

Courier Press, Leamington Spa, England.

## Bouchon pour réservoir d'hydrocarbure ou autre liquide analogue

Il est bien connu que les bouchons de réservoir, et tout particulièrement ceux qui sont destinés aux hydrocarbures ou autres liquides analogues, doivent comporter un passage d'aération et que ce passage présente un inconvénient grave, notamment lorsque le réservoir doit être déplacé, par exemple lorsqu'il constitue un réservoir d'automobile, une citerne montée sur un camion, ou autre. En effet, en cas d'accident ou d'inclinaison du réservoir le passage d'aération se transforme en passage de fluide, ce qui est dangereux.

Divers moyens ont été envisagés pour interdire la sortie du liquide du réservoir vers l'extérieur. Notamment il a été proposé de réaliser des bouchons comportant dans le passage d'aération une chambre dans laquelle flotte un clapet qui, sous l'action de la pression du liquide dans le réservoir, est repoussé contre l'orifice faisant communiquer la chambre avec l'extérieur. En particulier le DE—A—2 207 044 décrit un bouchon de réservoir de ce type, dans lequel un clapet plat, en forme de disque, coopère avec un siège entourant, à l'intérieur de la chambre, l'entrée d'air pour fermer cette entrée sous l'action de la pression du liquide. Malheureusement, dans un dispositif ainsi réalisé le clapet ne peut fermer hermétiquement la sortie du liquide que lorsque le réservoir est en position normale d'utilisation ou pratiquement totalement renversé. Dans le cas d'une inclinaison intermédiaire la fermeture est défectueuse et les risques de fuite subsistent.

La présente invention a pour but de remédier à cet inconvénient en réalisant un bouchon dans lequel le passage d'aération est fermé automatiquement par le liquide lui-même, quelle que soit l'inclinaison du réservoir.

Cette invention a en effet pour objet un bouchon de réservoir comportant un clapet en forme de disque plat qui flotte dans une chambre intercalée dans le passage d'aération, entre une entrée d'air extérieur et une sortie vers le réservoir, et qui coopère avec un siège entourant, à l'intérieur de cette chambre, l'entrée d'air pour fermer cette entrée sous l'action de la pression du liquide contenu dans le réservoir, dans lequel l'une des faces en regard du siège et du clapet comporte une surface en forme de portion de sphère, tandis que l'autre de ces faces comporte un évidement, de sorte que le contact de ces deux faces s'effectue le long d'une ligne circulaire entourant l'entrée d'air, quelle que soit l'inclinaison du clapet, et dans lequel le fond de la chambre est percé de plusieurs orifices périphériques de communication avec le réservoir, le clapet comportant en regard de ces orifices une surface continue, insuffisante pour les recouvrir tous simultanément bien que le diamètre du clapet soit très grand par rapport à ceux des orifices et que le jeu diamétral et axial entre lui et la chambre soit faible.

En fonctionnement normal le clapet est maintenu écarté de son siège, à la fois par la pression de l'air et par son propre poids. L'aération s'effectue normalement mais ne ferme pas la communication entre la chambre et le réservoir, de sorte que l'échange gazeux peut s'effectuer dans les deux sens entre le réservoir et l'extérieur. Au contraire si le liquide contenu dans le réservoir tend à s'enfuir, il se répand entre le fond de la chambre et la clapet et, même s'il n'est passé que par certains des orifices de la chambre, il repousse le clapet contre le siège et ferme le passage d'aération. Inversement, ce fluide peut aisément retourner dans le réservoir par certains des orifices du fond de la chambre, alors que l'air s'échappe par d'autres, ou même que certains orifices sont fermés par le clapet en position inclinée.

Selon différents modes de réalisation, le siège peut être sphérique, conique ou annulaire, tandis que le clapet comporte une surface conique, annulaire ou encore sphérique, l'une ou l'autre des surfaces en regard étant toujours sphérique.

Le clapet peut, par exemple, être constitué par un bossage sphérique formé sur un disque plat et coopérant avec un siège formé par un évidement conique de la paroi supérieure d'une chambre plate, percée d'un orifice central, ou inversement le clapet peut comporter un évidement central partiellement délimité par une surface tronconique, tandis que le siège est formé par une paroi convexe sphérique.

En variante, l'entrée d'air peut être constituée par plusieurs petits orifices percés dans la partie centrale de la paroi supérieure de la chambre.

La description ci-dessous de modes de réalisation représentés aux dessins annexés et donnés à titre d'exemples non limitatifs, fera d'ailleurs ressortir les avantages et caractéristiques de l'invention.

Sur ces dessins:

— la fig. 1 est une vue en coupe diamétrale d'un bouchon de réservoir suivant l'invention;

— la fig. 2 est une vue, à plus grande échelle, d'un autre mode de réalisation du clapet;

— la fig. 3 est une vue analogue à la figure 2, d'une variante de réalisation;

— la fig. 4 est une figure analogue à la figure 3, montrant une autre variante de réalisation.

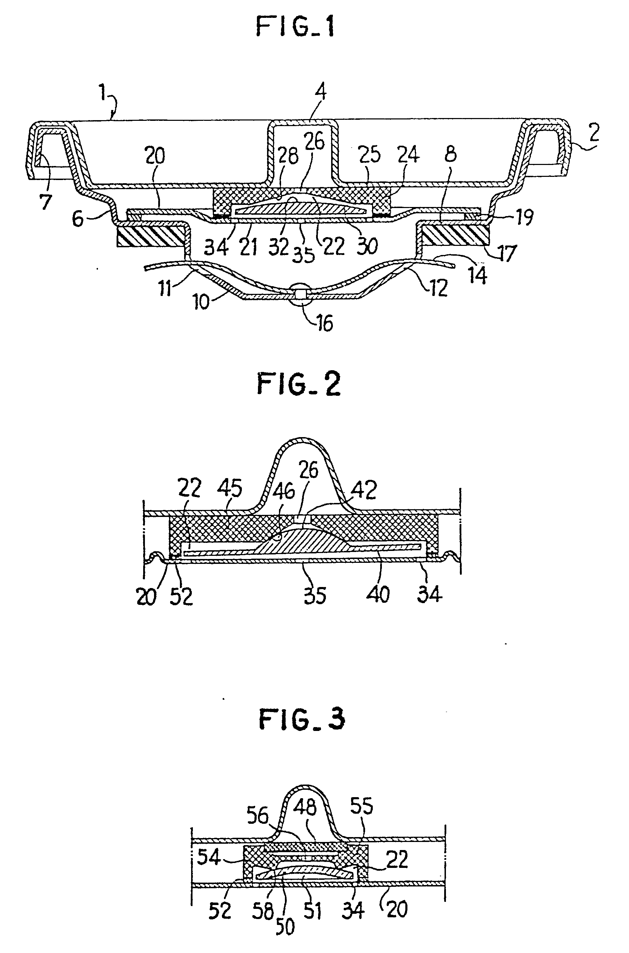

Le bouchon représenté sur la figure 1 comporte, de la manière habituelle, un couvercle circulaire 1, embouti de façon à former un rebord annulaire 2 et une rainure diamétrale 4 en saillie. Ce couvercle 1 est placé sur un fond 6 qui comporte également un rebord annulaire 7 placé à l'intérieur du rebord 2, forme un épaulement plat 8 d'appui sur le bord du réservoir, et est muni d'un prolongement 10 de pénétration à l'intérieur de ce dernier. Le prolongement 10 comporte deux fentes, respectivement 11 et 12, de passage de languettes élastiques 14 serrées sur le fond 6 par l'intermédiaire d'un rivet 16. Les languettes 14 font saillie à l'extérieur du prolongement 12, en dessous de l'épaulement 8, et assurent le serrage du bouchon contre le bord du réservoir, un anneau d'étanchéité 17 étant appliqué sur la face inférieure de l'épaulement 8.

Entre le couvercle 1 et le fond 6 une coupelle 20 est fixée de manière étanche, par l'intermédiaire d'un joint d'étanchéité 19, à l'intérieur de la cavité interne du bouchon, sur la face supérieure de l'épaulement 8. La partie centrale de cette coupelle forme le fond d'une chambre 22 délimitée par une chemise cylindrique 24 solidaire d'un chapeau 25 qui est percé d'un trou central 26. La chemise a une hauteur relativement faible et la chapeau est évidé dans sa partie centrale pour former un siège 28 de forme tronconique, prolongé à son sommet par le trou ou l'orifice d'entrée d'air 26. A l'intérieur de la chambre 22 flotte un clapet 30, relativement plat, qui est formé par un disque ayant une face bombée, en forme de calotte sphérique, 32, en regard du siège tronconique 28. La face opposée du clapet 30 est plate et parallèle au fond de la coupelle 20, qui est percé d'un certain nombre d'orifices 34 au voisinage de sa périphérie. Un orifice central 35 est de préférence également percé dans le fond de la coupelle.

Le diamètre de la face inférieure du clapet est légèrement plus petit que celui de la chambre 22, de façon à donner au clapet un faible jeu diamétral mais également à laisser toujours libre au moins une portion des orifices 34. Le clapet 30 dispose en outre d'un certain jeu axial et a une épaisseur suffisamment faible par rapport à son diamètre pour lui permettre de prendre une position inclinée à l'intérieur de la chambre.

La cavité interne du bouchon est ainsi divisée en deux parties et l'espace entre le rebord 7 et le rebord 2 par lequel l'air peut pénétrer à l'intérieur du bouchon est séparé par la chambre 22 de la partie inférieure de ce bouchon délimitée par le fond 6 comportant les fentes 11 et 12 qui communiquent, lorsque le bouchon est en place, avec l'intérieur du réservoir. Grâce à cette disposition, l'air ayant pénétré dans le bouchon et à l'intérieur de la nervure diamétrale 4 ne peut s'échapper que par l'orifice 26 du chapeau 25, la chambre 22 et les orifices 34, en direction du réservoir, les gaz sortant du réservoir suivant un trajet inverse.

Sous l'action de la pression de l'air ayant pénétré à l'intérieur du bouchon et arrivant par l'orifice 26, et/ou de son propre poids, le clapet 30 est repoussé vers le fond 21 de la chambre 22, de sorte que le passage d'aération est ouvert. Toutefois si, pour une raison quelconque, la pression dans le réservoir sur lequel est monté le bouchon s'accroît, ou si par suite d'une inclinaison de ce réservoir le liquide contenu dans ce réservoir pénètre à l'intérieur de la chambre 22 et exerce une pression sur le clapet, celui-ci est repoussé contre le siège 28 et ferme le passage pour interdire toute fuite de liquide. On constate alors que la surface sphérique 32 et le siège tronconique 28 peuvent entrer en contact étanche, même lorsque le clapet 30 n'est plus en position horizontale mais est incliné. La ligne circulaire de contact entre ces deux surfaces se déplace en fonction de l'inclinaison mais entoure toujours l'orifice 26 qu'elle isole. Par suite, même lorsque le réservoir n'est pas dans sa position normale, le clapet peut assurer une fermeture rigoureuse du passage d'aération.

La multiplicité des orifices 34 et 35 ainsi que leurs positions particulières assurent une action rapide de la pression du liquide sur toute la face correspondante du clapet, lorsque celui-ci est en position horizontale, mais de plus garantit une fermeture automatique dès que le réservoir a une inclinaison anormale. En effet, il suffit que le liquide pénétrant dans la chambre 22 par l'un de ses orifices, avec une pression supérieure à celle de l'air ambiant, repousse partiellement le clapet pour que celui-ci soit appliqué de manière étanche sur le siège, dans la position du clapet de la figure 2. Le clapet 40 de cette figure 2 a, il est vrai, une forme légèrement différente de celui de la figure 1 mais son fonctionnement est analogue.

Le clapet 40 est en effet constitué par un disque plat dont seule la partie centrale est bombée et forme un bossage sphérique 42 coopérant avec un évidement central tronconique 46 du chapeau 45, qui délimite la chambre 22. Comme le clapet 30 le clapet 40 peut pivoter à l'intérieur de la chambre 22, le jeu dont il dispose est toutefois supérieur, et il peut prendre, par exemple, la position représentée sur la figure 2 dans laquelle l'une de ses extrémités est pratiquement en contact avec la paroi supérieure de la chambre 22, tandis que son extrémité opposée est sensiblement en appui, à la partie inférieure de cette chambre, sur la coupelle 20, le bossage 42 étant cependant en contact avec le siège 46. Il est clair que dans une telle position du clapet toute fuite du liquide contenu dans le réservoir, par l'orifice 26, est rendue impossible. Le liquide pénétrant dans la chambre 22, entre la coupelle 20 et le clapet 40, a toutefois la possibilité de retourner au réservoir puisque non seulement l'orifice central 35, mais également au moins l'un des orifices latéraux, sont ouverts.

Une sécurité accrue peut encore être apportée en montant sur le chapeau 55, au droit de l'orifice 56 (fig. 3), une pastille filtrante 48 qui laisse librement passer l'air mais réduit les possibilités de passage des liquides.

En outre, au lieu d'être constitué par la surface conique interne de l'évidement du chapeau de la chambre, le siège, dans le mode de réalisation représente sur cette figure 3, est constitué par une saillie annulaire 58 formée par l'extrémité de cet évidement tronconique. Le clapet 50, coopérant avec ce siège, a une face supérieure qui est sphérique, de sorte qu'il entre facilement en contact étanche avec la saillie 58, quelle que soit son inclinaison. La face de ce clapet 50, qui est tournée vers les orifices 34 de communication avec le réservoir, comporte de préférence un évidement central 51, ce qui allège le clapet et accroît la surface soumise à la pression du liquide.

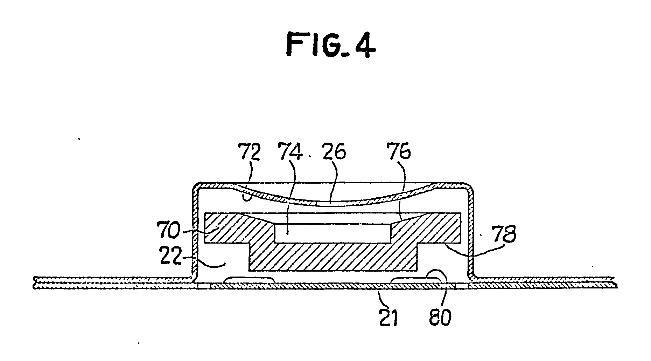

Bien entendu le siège peut également avoir une forme sphérique en saillie à l'intérieur de la chambre, ainsi que représenté en 72 sur la figure 4. Le clapet 70 coopérant avec un tel siège comporte un évidement central 74 dont le bord interne délimite la ligne de contact avec le siège. De préférence, ce bord est chanfreiné et forme une surface tronconique 76. La face opposée du clapet 70 est, par exemple, évidée à sa périphérie en 78.

Quel que soit le mode de réalisation du clapet et du siège, des bossages 80 peuvent être prévus sur le fond de la chambre 22 pour interdire au clapet de coller sur le fond 21 et maintenir en permanence un espace permettant au liquide d'exercer une pression sur le clapet.

L'étanchéité entre la coupelle 20 et la chemise 24 ou 54 est le plus souvent renforcée par un joint annulaire tel que celui représenté en 52.

Le clapet est de préférence réalisé en une matière plastique résistant aux hydrocarbures et au gonflement à l'essence et ayant également une bonne tenue en température, telle par exemple que celle vendue sous le moin de Rilsan. De la même manière la chambre dans laquelle se déplace le clapet, et notamment les chapeau et chemise qui la délimitent, peuvent être réalisés en matière plastique. Il est également possible de réaliser ces organes en métal.

Dans tous les cas le bouchon assure une fermeture très sûre car il permet l'aération du réservoir tout en interdisant, ou tout au moins en limitant à une valeur de fuite extrêmement faible répondant aux exigences des normes de sécurité, la sortie du liquide contenu dans ce réservoir.

En effet, le grand rayon de la face sphérique évite tout risque de coincement sur le siège conique, tandis que le clapet en forme de disque permet une fermeture contre les fuites de liquide dès que le réservoir est incliné, même d'un angle relativement faible. Par ailleurs la présence dans la coupelle d'orifices latéraux, de préférence au nombre de quatre et diamétralement opposés, qui débouchent sur la périphérie du clapet, permet à l'air de circuler du réservoir à l'extérieur ou inversement, quelle que soit la position du clapet.

**Revendications**

1. Bouchon pour réservoir d'hydrocarbure, ou autre liquide analogue, comportant un passage d'aération et un clapet (30, 40) en forme de disque qui flotte dans une chambre (22) intercalée dans le passage d'aération, entre une entrée d'air extérieur (26, 56) et une sortie vers le réservoir (34, 35), et qui coopère avec un siège entourant, à l'intérieur de cette chambre, l'entrée d'air pour fermer cette entrée sous l'action de la pression du liquid contenu dans le réservoir, caractérisé en ce que l'une des faces en regard du siège (28, 58, 46, 72) et du clapet (30, 40, 50, 70) comporte une surface en forme de portion de sphère (32, 42, 72), tandis que l'autre de ces faces comporte un évidement (28, 46, 74), de sorte que le contact de ces deux faces s'effectue le long d'une ligne circulaire entourant l'entrée d'air (26, 56), quelle que soit l'inclinaison du clapet (30, 40, 50, 70), et en ce que le fond (21) de la chambre (22) est percé de plusieurs orifices périphériques (34) de communication avec le réservoir, le clapet (30, 40, 50, 70) comportant en regard de ces orifices (34) une surface continue, insuffisante pour les recouvrir tous simultanément bien que le diamètre du clapet soit très grand par rapport à ceux des orifices et que le jeu diamétral et axial entre lui et la chambre (22) sont faible.

2. Bouchon suivant la revendication 1, caractérisé en ce que le fond (21) de la chambre (22) comporte également un orifice central (35) de communication avec le réservoir.

3. Bouchon suivant l'une des revendications 1 et 2, caractérisé en ce que le clapet comporte une surface sphérique convexe (32) en regard du siège, le siège du clapet étant délimité par un évidement à paroi tronconique (28).

4. Bouchon suivant l'une des revendications 1 et 2, caractérisé en ce que le siège (72) du clapet a une forme sphérique convexe en saillie à l'intérieur de la chambre (22), le clapet (70) présentant un évidement central (74).

5. Bouchon suivant l'une des revendications 1 et 2, caractérisé en ce que le clapet (40) est formé par un disque muni d'un bossage central sphérique (42) coopérant avec un siège conique (28), la chambre (22) étant relativement large de sorte que le clapet (40) peut pivoter à l'intérieur de cette chambre.

6. Bouchon suivant l'une des revendications 1 à 5, caractérisé en ce que la paroi supérieure de la chambre porte une pastille filtrante (48) au droit de l'orifice d'entrée d'air (56).

7. Bouchon suivant l'une des revendications 1 à 6, caractérisé en ce que l'entrée est constituée par un orifice central (25, 56) percé dans la paroi supérieure de la chambre.

8. Bouchon suivant l'une des revendications 1 à 6, caractérisé en ce que l'entrée d'air est constituée par plusieurs petits orifices percés dans la partie centrale de la paroi supérieure de la chambre.

9. Bouchon suivant l'une des revendications 1 à 8, caractérisé en ce que le fond (21) de la chambre comporte des bossages (80) évitant le collage du clapet.

10. Bouchon suivant l'une des revendications 1 à 9, caractérisé en ce que la face du clapet éloignée du siège comporte un évidement central (51) ou un évidement périphérique (78) entourant la surface plane insuffisante pour recouvrir tous les orifices simultanément.

**Patentansprüche**

1. Verschlußdeckel mit Belüftungsdurchlaß für mit Kohlenwasserstoffen oder anderen, ähnlichen Flüssigkeiten gefüllte Behälter, bei dem ein scheibenförmiger Ventilkörper (30, 40) in einer in den Belüftungsdurchlaß eingeschalteten Kammer (22) zwischen einem Einlaß (26, 56) für Außenluft und einem zum Behälter hin gerichteten Auslaß (34, 35) schwimmend angeordnet ist und mit einem Ventilsitz zusammenwirkt, welcher seinerseits im Innern der Kammer den Lufteinlaß umgibt, so daß dieser Einlaß unter der Wirkung des von der im Behälter enthaltenen Flüssigkeit ausgeübten Druckes verschließbar ist, dadurch gekennzeichnet, daß eine der dem Sitz (28, 58, 46, 72) und dem Ventilkörper (30, 40, 50, 70) zugewandten Flächen eine Oberfläche (32, 42, 72), in Form eines Teils einer Kugel umfaßt, während die andere dieser Flächen eine Ausnehmung derart aufweist, daß sich die Berührung dieser beiden Flächen entlang einer kreisförmigen Linie vollzieht, die den Lufteinlaß (26, 56) umschließt, wie immer auch die Schrägstellung des Ventilkörpers (30, 40, 50, 70) sein möge, daß der Boden (21) der Kammer (22) von mehreren, peripher angeordneten, mit dem Behälter in Verbindung stehenden Öffnungen (34) durchbrochen ist, daß der Ventilkörper (30, 40, 50, 70) gegenüber diesen Öffnungen (34) eine durchgehende Oberfläche aufweist, die nicht ausreicht, um alle Öffnungen gleichzeitig abzudecken, auch wenn der Durchmesser des Ventilkörpers mit Bezug auf diejenigen der Öffnungen sehr groß und das radiale und axiale Spiel zwischen Ventilkörper und Kammer (22) gering ist.

2. Deckel nach Anspruch 1, dadurch gekennzeichnet, daß der Boden (21) der Kammer (22) weiterhin eine mittige Öffnung (35) aufweist, die mit dem Behälter in Verbindung steht.

3. Deckel nach einem der Ansprüche 1 und 2, dadurch gekennzeichnet, daß der Ventilkörper eine dem Ventilsitz zugewandte, konvexe Kugelfläche (32) aufweist, und daß der Ventilsitz des Ventilkörpers durch eine Ausnehmung mit kegelstumpfförmiger Wand (28) bestimmt ist.

4. Deckel nach einem der Ansprüche 1 und 2, dadurch gekennzeichnet, daß der Ventilsitz (72) des Ventilkörpers eine konvexe Kugelform hat und in das Innere der Kammer (22) vorspringt, und daß der Ventilkörper (70) eine mittige Ausnehmung (74) aufweist.

5. Deckel nach einem der Ansprüche 1 und 2, dadurch gekennzeichnet, daß der Ventilkörper (40) von einer Scheibe gebildet ist, die mit einem zentralen, kugeligen Vorsprung (42) versehen ist, der seinerseits mit einem kegelförmigen Ventilsitz (28) zusammenwirkt, und daß die Kammer (22) verhältnismäßig groß ist, so daß der Ventilkörper (40) sich im Innern dieser Kammer verschwenken kann.

6. Deckel nach einem der Ansprüche 1 bis 5, dadurch gekennzeichnet, daß die obere Wand der Kammer an der Stelle der Lufteintrittsöffnung (56) ein Filterplättchen (48) trägt.

7. Deckel nach einem der Ansprüche 1 bis 6, dadurch gekennzeichnet, daß der Einlaß von einer zentralen Öffnung (26, 56) gebildet ist, die durchgehend in der oberen Wand der Kammer ausgebildet ist.

8. Deckel nach einem der Ansprüche 1 bis 6, dadurch gekennzeichnet, daß der Lufteinlaß von mehreren kleinen Öffnungen gebildet ist, die durchgehend im Mittelteil der oberen Wand der Kammer ausgebildet sind.

9. Deckel nach einem der Ansprüche 1 bis 8, dadurch gekennzeichnet, daß der Boden (21) der Kammer Vorsprünge (80) aufweist, die ein Ankleben des Ventilkörpers verhindern.

10. Deckel nach einem der Ansprüche 1 bis 9, dadurch gekennzeichnet, daß die dem Ventilsitz abgekehrte Seite des Ventilkörpers eine mittig oder am Umfangsrand gelegene Ausnehmung (51) bzw. (78) aufweist, die die Oberfläche umgibt, die nicht ausreicht, um alle Öffnungen gleichzeitig abzudecken.

**Claims**

1. A filler cap for a tank for a hydrocarbon or like liquid, comprising a venting passage and a valve member (30, 40) in the shape of a disc which floats, in a chamber (22) inserted in the venting passage, between an inlet (26, 56) for exterior air and an outlet (34, 35) toward the tank, and which co-operates with a seat surrounding, inside said chamber, the air inlet so as to close said inlet under the action of the pressure of the liquid contained in the tank, characterized in that one of the confronting sides of the seat (28, 58, 46, 72) and valve member (30, 40, 50, 70) has a surface in the shape of a portion of a sphere (32, 42, 72) whereas the other of said confronting sides has a recess (28, 46, 74), so that the contact between said two sides occurs along a circular line surrounding the air inlet (26, 56) irrespective of the inclination of the valve member (30, 40, 50, 70), and in that the bottom (21) of the chamber (22) is provided with a plurality of peripheral orifices (34) communicating with the tank, the valve member (30, 40, 50, 70) having in confronting relation to said orifices (34) a continuous surface which is insufficient to cover all of said orifices simultaneously notwithstanding the fact that the diameter of the valve member is very large relative to the diameters of the orifices and the diametral and axial clearance between the valve member and the chamber (22) is small.

2. A filler cap as claimed in claim 1, characterized in that the bottom (21) of the chamber (22) also has a centre orifice (34) communicating with the tank.

3. A filler cap as claimed in claim 1 or 2, characterized in that the valve member has a convex part-spherical surface (32) in confronting relation to the seat, the seat being defined by a recess having a frustoconical wall (28).

4. A filler cap as claimed in claim 1 or 2, characterized in that the seat (72) has a convex part-spherical shape projecting inside the chamber (22), the valve member (70) having a centre recess (74).

5. A filler cap as claimed in claim 1 or 2, characterized in that the valve member (40) is formed by a disc provided with a part-spherical centre boss (42) which co-operates with a part-conical seat (28), the chamber (22) being relatively large so that the valve member (40) is free to pivot inside the chamber.

6. A filler cap as claimed in any one of the claims 1 to 5, characterized in that the upper wall of the chamber includes a filtering tablet (48) in the region of the air inlet (56).

7. A filler cap as claimed in any one of the claims 1 to 6, characterized in that the air inlet is formed by a centre aperture (26, 56) in the upper wall of the chamber.

8. A filler cap as claimed in any one of the claims 1 to 6, characterized in that the air inlet is formed by a plurality of small orifices formed in the centre part pf the upper wall of the chamber.

9. A filler cap as claimed in any one of the claims 1 to 8, characterized in that the bottom (21) of the chamber has bosses (80) which prevent the valve member from sticking against the bottom of the chamber.

10. A filler cap as claimed in any one of the claims 1 to 9, characterized in that the side of the valve member remote from the seat has a centre recess (51) or a peripheral recess (78) surrounding the flat surface which is insufficient to cover all of said orifices simultaneously.

0015 187

FIG_1

FIG_2

FIG_3

1

# FIG. 4